# EUROPEAN PATENT APPLICATION

(11) **EP 4 835 931 A1**
(43) Date of publication of application: **04.11.2026**
(21) Application number: 26175403.0
(22) Date of filing: 29.04.2026
(51) Int. Cl.: H01G 11/10, H01G 11/70, H01G 11/72, H01G 11/74, H01G 11/76, H01M 50/538, H01G 11/82, H01M 50/107

(54) **CURRENT COLLECTOR FOR AN ENERGY STORAGE CELL, ULTRACAPACITOR EQUIPPED THEREWITH, AND ENERGY STORAGE MODULE FOR A DATA CENTER**

(30) Priority: 03.05.2025 LU 601458; 10.06.2025 LU 602004; 23.06.2025 LU 602180
(71) Applicant: Skeleton Technologies GmbH, 04420 Markranstädt (DE)
(72) Inventor: Boudon, Antonin, 04420 Markranstädt (DE); Rapisarda, Mario, 04420 Markranstädt (DE); Madiberk, Taavi, 04420 Markranstädt (DE); Yildirim, Sinan, 04420 Markranstädt (DE)
(74) Representative: KASTEL Patentanwälte PartG mbB

(57) **Abstract**

In order to allow a lower ESR and improved thermal properties, the invention proposes a current collector assembly (10) for a cylindrical ultracapacitor (50), the current collector assembly (10) comprising a cylindrical electrode assembly (12) that has an axial contact surface (14); and a current collector (30) that has a current tab portion (32) and a leaf portion (40), wherein the current tab portion (32) has a straight long edge (34) and a short edge (36), wherein the leaf portion (40) protrudes from the long edge (34), wherein the long edge (34) has a length of 0.8 to 1.0 times the diameter of the electrode assembly (12).

## Description

The invention relates to a current collector assembly for an ultracapacitor. The invention further relates to an ultracapacitor and an energy storage module.

Applications for energy storage cells are becoming more and more specialized. An emerging application is peak shaving for artificial intelligence (Al) data centers, i.e. data centers that run Al models.

Peak shaving is the practice of absorbing very short-lived spikes in electrical demand inside the facility instead of pulling those spikes from the utility grid. Al workloads are a prime example as racks full of GPUs can jump from idle to hundreds of kilowatts of electrical power demand in milliseconds, e.g. during a training step or a batch of simultaneous inference calls. Grid providers and the data center operators typically dislike this spikey load profile, since generation and transmission need to be sized for the instantaneous peak even though the average draw is far lower.

Energy storage cells can generally be divided into batteries and capacitors. While batteries store electrical energy in chemical form, capacitors usually store electrical energy in an electric field. Capacitors and specifically ultracapacitors can be used - typically in electrical storage modules - to provide the necessary power in the short timeframe of milliseconds.

Ultracapacitors, also called supercapacitors, are a type of capacitor and can be divided into double-layer capacitors and pseudocapacitors. Double-layer capacitors store electrical energy in an electrostatic double layer, while pseudocapacitors store electrical energy electrochemically but in a different way than batteries. Recently, hybrid (super)capacitors have been developed that combine the properties of double-layer capacitors and pseudocapacitors.

CN 222 601 167 U discloses a cover plate assembly for a battery. The cover plate assembly comprises an electrical connector, a first insulating member, a cover plate, and a second insulating member stacked in sequence. Multiple anti-rotation structures are provided to effectively prevent relative rotation between two adjacent structural members, thereby realizing anti-rotation positioning of each structural member. The cover plate assembly further includes a current collector, and the current collector is provided with a first welding area and a second welding area, the pole pillars are welded to the first welding area, and the second welding area is used for welding with the pole core of the battery.

CN 222 581 303 U discloses another example of a current collector.

CN 222 507 917 U discloses a current collector and a battery, and aims to improve the technical problem of the electrolyte flow path being blocked after the current collector and the pole piece are welded. The current collector comprises a main body, the main body is provided with a central through hole, and edge openings and a peripheral through hole group located on opposite sides of the central through hole, the peripheral through hole group comprises at least one peripheral through hole, and the depth direction of the edge opening faces the central through hole.

CN 119 650 810 A discloses a positive electrode current collecting disk that includes a disc body part and a tail body part connected to the positive electrode flat structure, the tail body part is connected to the cap.

CN 115 298 896 A discloses a secondary battery, wherein a positive electrode of the secondary battery is joined to a positive electrode current collector plate at one end of an electrode winding body, and the negative electrode is on the electrode winding body. The other end of the winding body is joined to the negative electrode collector plate. The thickness of the non-coated part of the material is 5 µm or more and 20 µm or less, the thickness of the non-coated part of the negative electrode active material is 6 µm or more and 20 µm or less, the number of overlapping sheets of the non-coated part of the positive active material on the positive electrode side is 2 or more, and the negative electrode on the negative electrode side. The number of overlapping sheets of the active material non-coated portion is 2 or more.

CN 114 975 846 A discloses another example of a current collector.

EP 3 996 195 A1, EP 2 207 233 B1, US 2024 / 0 055 727 A1, US 2023 / 0 395 956 A1, US 2013 / 0 252 054 A1, US 2010 / 0 104 945 A1, US 2007 / 0 298 317 A1, and US 2007 / 0 269 685 A1 disclose further examples of current tabs.

It is the object of the invention to improve energy storage cells, preferably ultracapacitors.

The object is achieved by the subject-matter of the independent claims. Preferred embodiments are subject-matter of the dependent claims.

The invention provides a current collector assembly for a cylindrical ultracapacitor, the current collector assembly comprising a cylindrical electrode assembly that has an axial contact surface; and a current collector that has a current tab portion and a leaf portion, wherein the current tab portion has a straight long edge and a short edge, wherein the leaf portion protrudes from the long edge, wherein the long edge has a length of 0.8 to 1.0 times the diameter of the electrode assembly.

Preferably, the ratio of the lengths of the short edge to the long edge is from 1:2 to 1:3.

Preferably, the leaf portion has a width of 50 % to 80 %, preferably 60 % to 72 %, preferably of 63 % to 69 %, preferably of 2/3 of the length of the long edge.

Preferably, the leaf portion has a wider cross-section and/or has an extended structure towards the current tab portion.

Preferably, the extended structure is close to the welding lines, so that the extended structure is suitable to provide a shorter path for current travel from the electrode assembly to the negative current tab.

Preferably, the shape of the short edge is chosen from any of a straight short edge, a straight short edge with rounded corners, and a rounded, preferably an annular short edge.

Preferably, the current tab portion has an alignment feature formed therein that is configured to allow alignment, preferably centering, the current tab portion on the contact surface.

Preferably, the current tab portion is welded to the contact surface and at least one pair of weld seams are formed parallel to the long edge.

Preferably, the length of each weld seam is 25 % to 100 %, preferably 25 % to 41 %, preferably 30 % to 36 %, preferably 1/3 of the length of the long edge.

Preferably, the weld seams are equidistant from an imagined line marking a diameter of the contact surface. Preferably, the weld seams are equidistant from the long edges. Preferably, the weld seams are equidistant from an imagined line that is itself equidistant from the long edges.

Preferably, the distance between parallel weld seams is such that the area enclosed between the weld seams and imaginary connecting lines between their respective closest end points is the same as the area enclosed by each of the weld seams connected to its closest long edge with imaginary lines from their end points, the imaginary lines all being parallel.

Preferably, the current collector assembly further comprising a terminal member, wherein the leaf portion has a tapered end portion that is fixed to the terminal member in an electrically conductive manner.

Preferably, the current collector assembly further comprising a lid member and an insulating member. Preferably, the terminal member is fixed to the lid member via the insulating member so that the lid member and the terminal member are electrically insulated from each other.

Preferably, the leaf portion has at least one bend that allows to adjacent portions of the leaf portion to stack on top of each other parallel to the contact surface, without the adjacent portions contacting each other in a direction perpendicular to the contact surface.

The invention provides a cylindrical ultracapacitor configured for storing electrical energy, the ultracapacitor comprising a cylindrical can and a preferred current collector assembly, wherein the electrode assembly is inserted into the can and electrically connected to the can.

Preferably, the can is closed off by a lid assembly fixed and the lid assembly is preferably formed by the lid member, the insulating member, and the terminal member.

Preferably, the can is closed off by a lid assembly fixed, preferably welded to the can, and the lid assembly is preferably formed by the lid member, the insulating member, and the terminal member.

Preferably, the leaf portion is bent at least once such that adjacent portions of the leaf portion stack on top of each other parallel to the contact surface, without the adjacent portions contacting each other in a direction perpendicular to the contact surface.

The invention provides an energy storage module configured for providing electrical power upon demand to an electrical system, the energy storage module comprising an energy storage unit that includes a plurality of preferred ultracapacitors, and a control unit that controls charging and discharging of the energy storage unit.

Preferably, the control unit is configured to control the energy storage unit to enable peak shaving of electrical loads in a data center, preferably an Al data center.

In the pursuit of delivering ultra-low internal resistance and superior thermal performance for high-power applications improvements were made on the cylindrical ultracapacitor cell design. The design's innovation centers around a newly lid connection stripe and welding configuration, features that can collectively minimize equivalent series resistance (ESR).

The structure of the lid connection strip enables an increase in the electron accumulation from electrodes towards the current tab, which allows for a lower ESR of the cell.

The lowered ESR allows for less heating of the cells even during peak shaving events. This enhances thermal stability under typical conditions in Al data centers conditions. Furthermore, the effective lowering of thermal emissions from the cells allows their usage without increasing cooling capabilities of the data center. It is also possible to reduce the nominal power of the power lines to such data centers, as - at least during the peak shaving events - the additional power required can be drawn from energy storage modules with the cells according to the invention instead of the grid.

The cylindrical ultracapacitor includes a spirally wound electrode assembly comprising active materials. This electrode assembly is also referred to as a jelly roll. The positive electrode may employ activated carbon, while the negative electrode may incorporate either activated or (micro-)porous carbon. These materials are known for their high surface area and capacitive behavior, and have recently been improved over several development cycles to achieve enhanced charge storage capability. However, the main advantage of this design resides in the mechanical-electrical interface between the jelly roll and the external circuit.

The cylindrical cell may feature standard components such as a positive current tab, a negative current tab, a cylindrical can enclosure, a gasket for sealing, and an electrolyte filling hole. The integration of a specialized lid connection stripe, the current collector, that bridges the jelly roll and the negative current tab.

Unlike conventional designs where the current transfer path is often indirect, the inventive design incorporates a lid connection stripe with unique geometry and welding arrangements. The current tab portion may comprise two parallel sets of straight welding lines, each placed opposite the other and preferably equidistant from the center axis of the cell. These welding lines connect the jelly roll to the lid stripe directly, enabling an even distribution of current and a mechanically robust bond.

The proximity of the welding lines, e.g. from 1 mm to 7 mm apart, can significantly enhance current collection from the jelly roll. This close spacing allows to reduce the electrical path length, enabling electrons to reach the lid stripe with reduced resistance and increased speed. During extensive testing, various welding configurations were evaluated, including radial and distributed patterns. Surprisingly the parallel layout came out as the one with the lowest ESR.

The described configurations allow for shorter and more uniform current paths from the electrode assembly to the external terminals. Thus, the ESR can be reduces. Furthermore, localized heating can also be mitigated.

Another idea is modifying the physical dimensions of the current collector. The current collector preferably has an extended structure that fans out toward the negative current tab, aligning closely with all welded contact points. This expanded surface area can serve as both a thermal sink and a low-resistance bridge, significantly shortening the route from the jelly roll to the external circuit.

The structure of the current collector reduces the resistive losses typically associated with narrower, more isolated connection paths. The broader current collector allows for current to have multiple parallel routes to flow through, effectively lowering the cell's overall ESR. Empirical data gathered from performance testing showed that this structural change contributed to measurable improvements in both instantaneous power delivery and thermal dissipation. In heat-loaded scenarios, the reduced path length and improved conductivity allowed for faster thermal equilibrium, improving the operational safety and lifecycle of the component.

The negative current tab, which typically interfaces with the current collector may include a three-legged structure. Each leg is spaced such that uniform access points for current can be created to exit the cell. Two legs typically shorter, while the third leg may feature a wider connection surface, further enhancing the electrical and thermal stability. This geometry supports the efficient hand-off of current from the current collector, distributing the electrical load evenly across the connection and mitigating the formation of thermal hotspots.

The combination of the wide, extended lid stripe and the improved welding configuration forms a system-level solution that enables faster current accumulation and transmission. Current, once captured from the jelly roll, travels along a deliberately short and wide path with minimal resistance. The directness of this connection reduces impedance significantly compared to the known designs. Furthermore, the distributed nature of the welds ensures redundancy and stability, even under conditions of mechanical stress or thermal cycling.

Beyond performance, the design can also improve manufacturability. The repeatability and symmetry of the welding lines simplify the automated welding process during production, ensuring consistency across large volumes. This contributes to the ability to scale the production of these cells while maintaining stringent quality control.

Test by the Applicant of this cell design achieved the lowest ESR recorded in any commercially available D33-form factor ultracapacitor. In high-frequency applications, where milliseconds matter and internal resistance can make or break efficiency, even small improvements can make all the difference.

Moreover, the design's impact on thermal management is significant. As current flows more efficiently and directly through the optimized paths, the resulting I²R losses can be further mitigated, reducing the generation of excess heat. In turn, the cell is able to maintain a lower operating temperature, which directly correlates with an extended lifespan and improved reliability, which are crucial considerations for mission-critical installations like server farms, grid backup systems, and transportation power modules.

Overall, the internal current path of the cell allows to reduce the distance electrons must travel, to increase conduction area, and thereby to achieve a lower ESR and enhanced thermal handling.

Embodiments of the invention are described in more detail with reference to the accompanying schematic drawings that are listed below
- Fig. 1: depicts an embodiment of a current collector assembly;
- Fig. 2: depicts a perspective view of the current collector;
- Fig. 3: depicts a perspective view of the pre-bent current collector; and
- Fig. 4: depicts a cross-section through a top part of an energy storage cell.

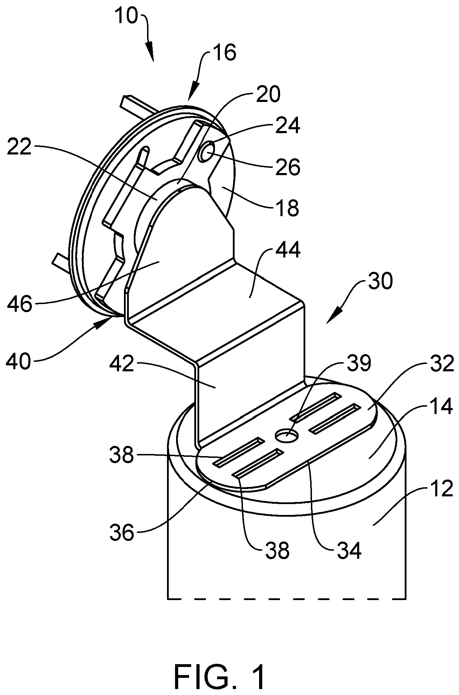

Referring to Fig. 1, a current collector assembly 10 is shown. The current collector assembly 10 includes an electrode assembly 12. The electrode assembly 12 is made in a typical manner and includes active materials for anode and cathode that are provided on a conductive surface. The electrodes are separated by a separator. The whole electrode assembly 12 is made by winding the electrodes and the separator in a manner known per se. The electrode assembly 12 forms a contact surface 14. The contact surface 14 allows to contact one of the electrodes of the electrode assembly 12.

The current collector assembly 10 includes a lid assembly 16. The lid assembly 16 has a disc-like lid member 18 made of a conductive material, e.g., aluminium. The lid assembly 16 includes a terminal member 20 that is fixed to the lid member 18 and electrically insulated therefrom by an insulating member 22. The lid assembly 16 may include a filling opening 24 that can be plugged using a plug member 26.

The current collector assembly 10 includes a current collector 30. The current collector 30 has a current tab portion 32. The current tab portion 32 has parallel long edges 34 and short edges 36. The short edges 36 are annular edges. The current tab portion 32 has an overall rectangular shape. The current tab portion 32 extends along the diameter of the contact surface 14. The current tab portion 32 is welded to the electrode assembly 12, specifically to the contact surface 14.

The current tab portion 32 comprises a plurality of weld seams 38. The weld seams 38 are arranged in parallel pairs. The weld seams 38 are parallel to the long edges 34. The weld seams 38 are equidistant from the long edges 34 and among themselves. In other words the distance between one weld seam 38 and its closest long edge 34 is the same as the distance between the other weld seam 38 and its closest long edge 34 as well as the distance between the weld seams 38.

The current tab portion 32 may comprise an alignment hole 39 that is an example for an alignment feature. The alignment hole 39 can be used to correctly position the current tab portion 32 on the contact surface 14 of the electrode assembly 12.

The current collector 30 includes a leaf portion 40. The leaf portion 40 protrudes from one long edge 34. The leaf portion 40 has a first leg portion 42, a second leg portion 44, and a tapered portion 46. These portions are defined by bends in the leaf portion 40. The tapered portion 46 tapers towards the end and is preferably welded to the terminal member 20.

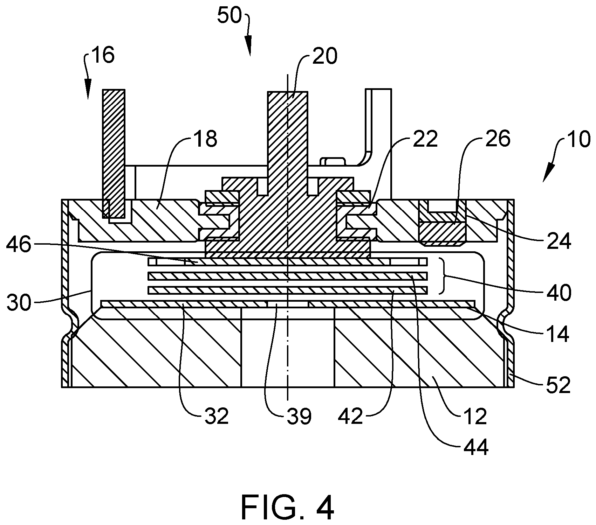

The leg portions 42, 44 are formed such that they can stack on top of each other and the current tab portion 32, when the lid assembly 16 is in its installed position (Fig. 4).

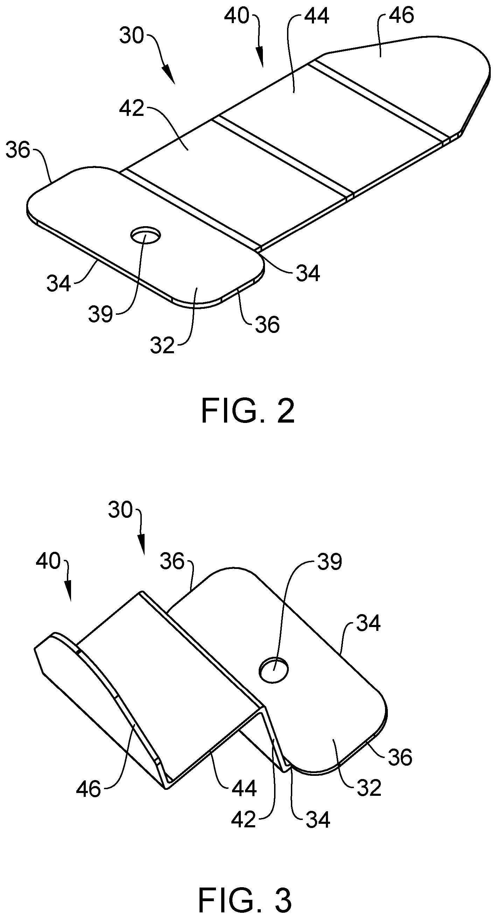

Referring to Fig. 2 and Fig. 3, another embodiment of the current collector 30 is depicted and described insofar as it differs from the previous embodiment. The current among tab portion 32 has a different shape such that the short edges 36 are partially straight and have rounded corners.

Referring to Fig. 4, manufacturing of an energy storage cell 50 is described in more detail. The energy storage cell 50 comprises a can 52. The can 52 defines a space in which the current collector assembly 10 is disposed such that the electrode assembly 12 engages the can 52. Specifically, the electrode assembly 12 is inserted into the can 52 with the current collector 30 pre-bent. The first leg portion 42 gets stacked on top of current tab portion 32, the second leg portion 44 is stacked on top of the first leg portion 42, and the tapered portion 46 is stacked on top of the second leg portion 44. The lid assembly 16 gets welded onto the can 52. Electrolyte is filled through the filling opening 24 that is subsequently closed by a plug member 26.

Thermal simulations for a 10 A current as a steady state show that the temperature increase is smaller by a factor of 2 to 3 compared to the prior art configurations. The ESR was determined experimentally to be smaller by about 25 % compared to the conventional configurations.

The contribution of the current collector 30 to the 10 ms ESR value is only about 30 %. While still being the single largest contribution to the 10 ms ESR value of the energy storage cell 50, the resistance is significantly smaller than of the conventional designs.

### List of reference signs:

- 10: current collector assembly
- 12: electrode assembly
- 14: contact surface
- 16: lid assembly
- 18: lid member
- 20: terminal member
- 22: insulating member
- 24: filling opening
- 26: plug member

- 30: current collector
- 32: current tab portion
- 34: long edge
- 36: short edge
- 38: weld seam
- 39: alignment hole
- 40: leaf portion
- 42: first leg portion
- 44: second leg portion
- 46: tapered portion

- 50: energy storage cell (ultracapacitor)
- 52: can

## Claims

1. A current collector assembly (10) for an ultracapacitor (50), the current collector assembly (10) comprising an electrode assembly (12) that has an axial contact surface (14); and a current collector (30) that has a current tab portion (32) and a leaf portion (40), wherein the current tab portion (32) has a straight long edge (34) and a short edge (36), wherein the leaf portion (40) protrudes from the long edge (34), wherein the long edge (34) has a length of 0.8 to 1.0 times the diameter of the electrode assembly (12).

2. The current collector assembly (10) of claim 1, wherein the ratio of the lengths of the short edge (36) to the long edge (34) is from 1:2 to 1:3.

3. The current collector assembly (10) of any of the preceding claims, wherein the leaf portion (40) has a width of 50 % to 80 %, preferably 60 % to 72 %, preferably of 63 % to 69 %, preferably of 2/3 of the length of the long edge (34).

4. The current collector assembly (10) of any of the preceding claims, wherein the shape of the short edge (36) is chosen from any of a straight short edge, a straight short edge with rounded corners, and a rounded, preferably an annular short edge.

5. The current collector assembly (10) of any of the preceding claims, wherein the current tab portion (32) has an alignment feature formed therein that is configured to allow alignment, preferably centering, the current tab portion (32) on the contact surface (14).

6. The current collector assembly (10) of any of the preceding claims, wherein the current tab portion (32) is welded to the contact surface (14) and at least one pair of weld seams (38) are formed parallel to the long edge (34).

7. The current collector assembly (10) of claim 6, wherein the length of each weld seam (38) is 25 % to 100 %, preferably 25 % to 41 %, preferably 30 % to 36 %, preferably 1/3 of the length of the long edge (34).

8. The current collector assembly (10) of claim 6 or 7, wherein the weld seams (38) are equidistant from an imagined line marking a diameter of the contact surface (14) and/or equidistant from the long edges (34) and/or equidistant from an imagined line that is itself equidistant from the long edges (34).

9. The current collector assembly (10) of any of the preceding claims, further comprising a terminal member (20), wherein the leaf portion (40) has a tapered end portion (46) that is fixed to the terminal member (20) in an electrically conductive manner.

10. The current collector assembly (10) of claim 9, further comprising a lid member (18) and an insulating member (22), wherein the terminal member (20) is fixed to the lid member (18) via the insulating member (22) so that the lid member (18) and the terminal member (20) are electrically insulated from each other.

11. The current collector assembly (10) of any of the preceding claims, wherein the leaf portion (40) has at least one bend that allows to adjacent leg portions (42, 44) of the leaf portion (40) to stack on top of each other parallel to the contact surface (14), without the adjacent leg portions (42, 44) contacting each other in a direction perpendicular to the contact surface (14).

12. An ultracapacitor (50) configured for storing electrical energy, the ultracapacitor (50) comprising a can (52) and a current collector assembly (10) of any of the preceding claims, wherein the electrode assembly (12) is inserted into the can (52) and electrically connected to the can (52).

13. The ultracapacitor (50) of claim 12, wherein the can is closed off by a lid assembly (16) fixed, preferably welded to the can (52), and the lid assembly (16) is preferably formed by the lid member (18), the insulating member (22), and the terminal member (20).

14. The ultracapacitor of claim 12 or 13, wherein the leaf portion (40) is bent at least once such that adjacent portions (42, 44) of the leaf portion (40) stack on top of each other parallel to the contact surface (14), without the adjacent portions (42, 44) contacting each other in a direction perpendicular to the contact surface (14).

15. An energy storage module configured for providing electrical power upon demand to an electrical system, the energy storage module comprising an energy storage unit that includes a plurality of ultracapacitors (50) of any of the claims 12 to 14, and a control unit that controls charging and discharging of the energy storage unit, wherein preferably the control unit is configured to control the energy storage unit to enable peak shaving of electrical loads in a data center, preferably an Al data center.
